# FASCICULE DE BREVET EUROPEEN

(11) **EP 3 165 418 B1**
(45) Date de publication et mention de la délivrance du brevet: **05.09.2018**
(21) Numéro de dépôt: 16192883.3
(22) Date de dépôt: 07.10.2016
(51) Int. Cl.: B60S 1/48

(54) **PROCÉDÉ DE COMMANDE D'UN SYSTÈME D'ESSUYAGE ET DE LAVAGE D'UNE VITRE D'UN VÉHICULE ET SYSTÈME LE METTANT EN OEUVRE**
STEUERVERFAHREN EINES WISCH-/WASCHSYSTEMS FÜR DIE SCHEIBE EINES FAHRZEUGS, UND SYSTEM ZUR VERWENDUNG DESSELBEN
METHOD FOR CONTROLLING A SYSTEM FOR WIPING AND WASHING A WINDOW OF A VEHICLE AND SYSTEM USING IT

(30) Priorité: 03.11.2015 FR 1560526
(43) Date de publication de la demande: 10.05.2017
(73) Titulaire: Valeo Systèmes d'Essuyage, 78322 Le Mesnil Saint Denis (FR)
(72) Inventeur: THEBAULT, Denis, 63370 LEMPDES (FR)
(74) Mandataire: Vincent, Catherine Marie Marguerite

(56) Documents cités:
- US-A1- 2013 207 577
- US-A1- 2015 113 754

## Description

La présente invention concerne les systèmes d'essuyage et de lavage d'une vitre d'un véhicule, notamment automobile.

Une automobile, notamment, est classiquement équipée d'un système d'essuyage du pare-brise, servant à assurer au conducteur une vision dégagée de son environnement, en particulier en cas d'intempéries. Un tel système comprend généralement un ou deux balais d'essuyage entraînés par un bras dans un mouvement de va-et-vient sur le pare-brise. Ces balais portent des lames racleuses, réalisées en une matière élastique, qui frottent contre le pare-brise et évacuent l'eau en l'amenant en dehors du champ de vision du conducteur.

Il est également classique de compléter le système d'essuyage par des moyens de lavage agencés pour projeter un liquide sur le pare-brise, de manière à faciliter la dissolution des salissures, et ainsi augmenter la qualité du nettoyage du pare-brise sous l'action du système d'essuyage. Les moyens de lavage sont généralement actionnés sur un ou quelques va-et-vient du balai pour réaliser un cycle de lavage.

Pour les moyens de lavage, Il est également connu d'embarquer des gicleurs sur le balai, de manière à projeter le liquide immédiatement devant ce dernier durant sa progression. Cela permet d'assurer le passage de la lame racleuse du balai sur une surface mouillée par le liquide de lavage durant toute sa progression et ainsi d'améliorer l'efficacité du cycle de lavage.

Cependant, lorsque le pare-brise est très sale, la lame racleuse emporte du liquide de lavage pollué par les salissures jusqu'à sa position de retour après son va-et-vient. En conséquence, la lame racleuse touche une zone sale à sa position de retour après chaque va-et-vient. Elle n'est donc jamais complètement propre et étale des salissures sur la surface du pare-brise parcourue par le balai. Ce phénomène se produit particulièrement dans le cas où les moyens de lavage ne projettent du liquide de lavage que d'un côté du balai car, dans ce cas, l'une des faces de la lame racleuse n'est pas directement lessivée par ce liquide. Le document US 2015/0113754 A1 décrit un procédé pour laver une vitre de véhicule selon le préambule de la revendication 1. Il existe donc un besoin d'éviter d'entraîner des salissures présentes sur une vitre lors des va-et-vient du balai pour améliorer les performances des systèmes d'essuyage et de lavage d'une vitre sur un véhicule.

L'invention propose à cet effet un procédé pour laver une vitre de véhicule, à l'aide d'au moins un balai d'essuyage et de moyens de projection d'un liquide de lavage de la vitre, sur une surface d'essuyage délimitée entre une position de départ d'essuyage et une position d'arrivée d'essuyage pour ledit au moins un balai d'essuyage, de commande d'un système d'essuyage et de lavage d'une vitre d'un véhicule, ledit système comprenant un balai d'essuyage, des moyens d'actionnement dudit balai d'essuyage et des moyens de projection d'un liquide de lavage de la vitre, ledit procédé comprenant un ou plusieurs cycles de balayage comportant chacun:
- une première étape dans laquelle le balai d'essuyage est actionné de manière à parcourir la vitre entre une première position de départ et la position d'arrivée d'essuyage, et
- une deuxième étape dans laquelle le balai d'essuyage est actionné de manière à parcourir la vitre en sens inverse depuis la position d'arrivée d'essuyage jusqu'à une deuxième position de départ,
la première position de départ d'un cycle de balayage correspondant à la deuxième position de départ du cycle de balayage qui le précède. Ledit procédé est remarquable en ce qu'il démarre avec un premier cycle de balayage dont les première et deuxième positions de départ sont sensiblement identiques et sont au moins aussi éloignées de la position d'arrivée d'essuyage que la position de départ d'essuyage et dans lequel les moyens de projection sont activés au moins au cours de la première étape de manière à projeter du liquide de lavage devant le balai d'essuyage par rapport à son sens de progression, et en ce qu'il comporte, immédiatement après, un deuxième cycle de balayage dont la deuxième position de départ est décalée vers la position d'arrivée par rapport à la première position de départ

Le premier cycle de balayage permet de mouiller la vitre sur toute la zone d'essuyage et ainsi de balayer la poussière mélangée au liquide de lavage sur toute cette zone. Cependant, en revenant à sa position de départ, le balai y dépose de la poussière qui peut être entraînée sur la vitre lors d'un cycle d'essuyage ultérieur. Le décalage entre la deuxième position de départ et la première position de départ du deuxième cycle est ainsi effectué de manière à ce que le balai d'essuyage ne touche pas la zone de la vitre avec laquelle il était en contact dans la première position de départ lorsqu'il revient à la deuxième position de départ. De cette manière, si la vitre était sale et que le balai d'essuyage, au cours des va-et-vient précédents, a entraîné de la poussière puis l'a déposée sur la vitre en se positionnant à la première position de départ, on limite, voire élimine, le contact du balai d'essuyage avec cette poussière lorsqu'il est sur la deuxième position de départ à la fin du cycle de balayage. Ainsi, le balai d'essuyage peut repartir pour effectuer un va-et-vient sur la vitre sans entraîner cette poussière. Si le procédé comprend d'autres cycles de balayage avec activation des moyens de projection du liquide de lavage, cela permet d'améliorer leur efficacité. Si le procédé est suivi par des cycles d'essuyage, cela évite qu'ils étalent la poussière sur la vitre. Un tel procédé est particulièrement avantageux dans le cas où les moyens de projection de liquide de lavage n'envoient pas de liquide des deux côtés du balai d'essuyage et donc nettoient moins bien le côté de la lame racleuse orienté vers la position de départ.

Avantageusement, ledit procédé comprend, après le deuxième cycle de balayage, au moins un autre cycle de balayage dont la deuxième position de départ est décalée vers la position d'arrivée d'essuyage par rapport à sa première position de départ. Comme dans le cas précédent, de la poussière résiduelle laissée sur la vitre lors du premier cycle de balayage peut avoir été emportée puis déposée par le balai lors du deuxième cycle, sur sa deuxième position de départ. La deuxième position de départ décalée du troisième cycle permet d'éviter de toucher cette poussière dans des balayages ultérieurs. On peut éventuellement répéter ce processus avec des cycles de balayage supplémentaires, préférentiellement en activant le dispositif de lavage.

De préférence, les première et deuxième positions de départ de chaque cycle de balayage sont situées dans une zone déterminée proche de la position de départ d'essuyage, de manière à minimiser un étalement de poussières sur la surface d'essuyage en dehors de la dite zone déterminée.

Le fait que les première et deuxième positions de départ restent dans une zone proche de la position de départ d'essuyage permet de maintenir la majorité de la poussière dans cette zone, hors de la partie principale de la surface d'essuyage servant à la visibilité du conducteur. Typiquement cette zone correspond à un écart angulaire du balai inférieur à une douzaine de degrés, pour un mouvement rotatif du bras qui l'entraîne.

De préférence, pour au moins l'un des cycles de balayage effectué après le premier cycle de balayage, les moyens de projection sont activés au cours de la première étape de manière à projeter du liquide de lavage devant le balai d'essuyage par rapport à son sens de progression. Le lavage effectué au cours de cette étape permet de mieux emporter les poussières résiduelles avec le balai.

Avantageusement, pour le dernier cycle de balayage effectué, les moyens de projection d'un liquide de lavage de la vitre ne sont actionnés ni au cours de la première étape ni au cours de la deuxième étape., ladite position de départ du cycle d'essuyage correspondant à la deuxième position de départ d'un cycle de lavage du premier type le précédant.

Avantageusement, le procédé comprend, précédemment audit au moins un cycle de lavage du premier type, au moins un cycle de lavage effectué avant ledit au moins un cycle de lavage d'un deuxième type dans lequel la première et la deuxième position de départ sont sensiblement identiques et correspondent à la première position de départ dudit au moins un cycle de lavage du premier type.

Ainsi, la vitre a été nettoyée sur toute la surface balayée pendant les cycles suivant et les poussières emportées par le balai d'essuyage à l'occasion de ce cycle sont repoussées dans une première position qui n'est plus contactée par le balai à la fin des cycles suivants.

Dans un premier mode de réalisation du procédé, la première position de départ du premier cycle de balayage effectué est sensiblement la même que la position de départ d'essuyage.

Dans un deuxième mode de réalisation du procédé, la première position de départ du premier cycle de balayage effectué est plus éloignée de la position d'arrivée d'essuyage que la position de départ d'essuyage.

Dans un tel procédé, la deuxième étape de tous les cycles de balayage peut avantageusement s'effectuer sans activer les moyens de projection de liquide de lavage.

Avantageusement, le balai d'essuyage parcours la vitre en remontant lors de la première étape d'un cycle de balayage.

L'invention concerne également un dispositif de commande d'un système d'essuyage et de lavage d'une vitre d'un véhicule, ledit système comprenant un balai d'essuyage, des moyens d'actionnement dudit balai d'essuyage et des moyens de projection d'un liquide de lavage de la vitre (, ledit dispositif comprenant un organe électronique agencé pour activer les moyens d'actionnement dudit balai d'essuyage et les moyens de projection du liquide de lavage de manière à essuyer ladite surface d'essuyage avec ledit au moins un balai d'essuyage sans projeter de liquide de lavage à effectuer le procédé tel que décrit précédemment.

L'invention concerne aussi un système d'essuyage et de lavage d'une vitre d'un véhicule, ledit système comprenant un balai d'essuyage, des moyens d'actionnement dudit balai d'essuyage agencés pour que le balai d'essuyage parcours la vitre entre une position de départ et une position d'arrivée en modifiant la position de départ lors de son retour, des moyens de projection d'un liquide de lavage de la vitre agencés pour projeter le liquide de lavage devant le balai d'essuyage lors de sa progression d'une position de départ vers la position d'arrivée, et un tel dispositif de commande.

De préférence, les moyens d'actionnement d'un balai d'essuyage comprennent un moteur commandable électroniquement et un bras d'entraînement du balai d'essuyage, ledit moteur entraînant en rotation ledit bras d'entraînement.

Avantageusement, un tel système est agencé de manière à ce que le décalage entre la deuxième position de départ et la première position de départ, sur au moins un cycle de balayage, corresponde à une différence angulaire au moins égale à deux degrés dans la rotation du bras d'entraînement.

De préférence, le système est configuré pour que la position de départ d'essuyage (P1) soit basse par rapport à la position d'arrivée d'essuyage.

Avantageusement, un tel système est configuré pour effectuer des cycles d'essuyage, dans lesquels le balai d'essuyage fait un va-et-vient entre une position de départ d'essuyage et la position d'arrivée d'essuyage sans que les moyens de projection d'un liquide de lavage de la vitre ne soient actionnés, et est agencé de manière à ce que le balai d'essuyage se positionne dans une position de parking, lorsqu'il n'est pas utilisé, plus éloignée de la position d'arrivée d'essuyage que la position de départ d'essuyage.

Dans ce cas, de préférence, le dispositif de commande est agencé de manière à commander un premier cycle de balayage dans lequel la première position de départ est ladite position « de parking ».

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique d'un système d'essuyage et lavage d'une vitre de véhicule utilisant l'invention,
- la figure 2 est une illustration des étapes d'un cycle d'essuyage avec le système de la figure 1,
- la figure 3 est une illustration des étapes d'un premier mode de réalisation d'un procédé de lavage selon l'invention avec le système de la figure 1, et
- la figure 4 est une illustration des étapes d'un deuxième mode de réalisation d'un procédé de lavage selon l'invention avec le système de la figure 1.

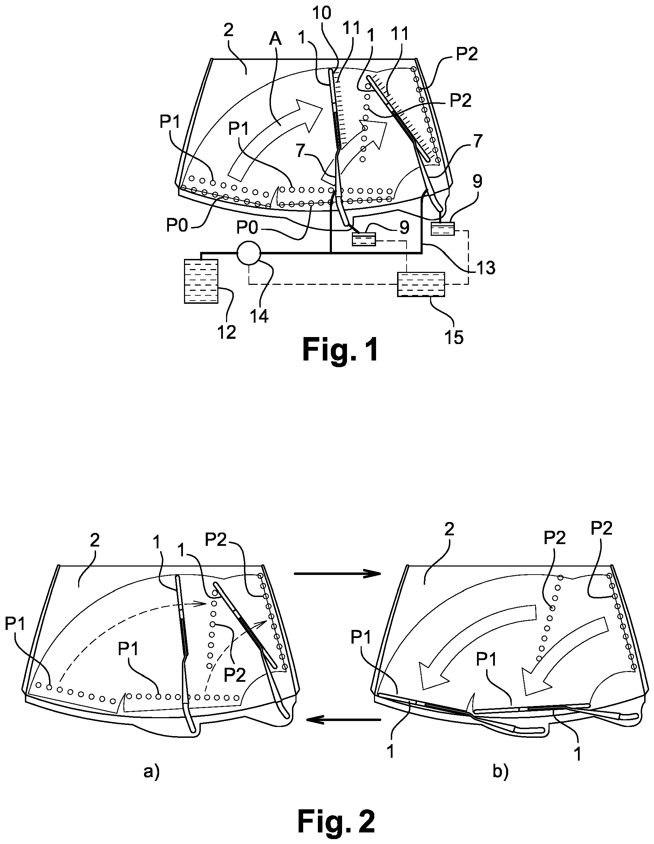

En référence à la figure 1, un système d'essuyage et de lavage utilisant l'invention comprend au moins un balai d'essuyage 1 qui, lorsqu'il est monté sur le véhicule, est en appui contre une face extérieure du pare-brise 2. Le pare-brise mentionné ici est un exemple de vitre essuyée par le système selon l'invention mais il va de soi que cette vitre peut être une lunette arrière de véhicule et, de manière générale, tout vitrage d'un véhicule. Le système d'essuyage et de lavage comprend ici deux balais d'essuyage 1.

Le ou les balais d'essuyage 1 sont généralement de type à lame racleuse plate (flat blade, en anglais), c'est-à-dire comprenant au moins une raclette plaquée contre le pare-brise 2, une ou plusieurs vertèbres de rigidification reliées à la raclette et qui s'étendent le long de celle-ci, et une fixation unique centrale réalisée par un connecteur mécanique lié à une extrémité d'un bras 7. Un tel balai d'essuyage 1 peut également comporter un déflecteur d'air solidaire de la lame racleuse, par exemple, et agencé de manière à exploiter l'effet dynamique du déplacement du véhicule pour augmenter la force d'appui du balai d'essuyage 1 sur le pare-brise 2.

Chaque balai d'essuyage 1 est mis en mouvement sur le pare-brise 2 du véhicule par des moyens d'actionnement. Ces moyens d'actionnement comprennent généralement un bras 7, auquel le balai d'essuyage 1 est relié par le connecteur mécanique, et un moteur électrique 9 entraînant le bras 7 dans un mouvement de va-et-vient sur la surface du pare-brise 2. Ici, le moteur d'entraînement 9 du bras 7 est commandable électroniquement, de sorte qu'il puisse faire glisser le balai d'essuyage 1 sur le pare-brise 2 avec une vitesse déterminée entre deux positions extrêmes, qui peuvent être modifiées entre deux cycles de va-et-vient. Les moyens d'entraînement peuvent également comporter des éléments non représentés sur la figure 1, tels qu'un réducteur de vitesse, pour adapter la vitesse de rotation du moteur électrique 9 à celle recherchée pour les balais d'essuyage 1, et un mécanisme de tringlerie, pour transmettre le mouvement de rotation en sortie du réducteur de vitesse.

Sur l'exemple présenté à la figure 1, correspondant généralement à un pare-brise 2 de véhicule de tourisme, l'ensemble du mécanisme comprenant le bras 7 et le moteur 9 peut faire parcourir au/aux balai(s) d'essuyage 1 une surface comprise entre une position de départ d'essuyage P1, proche du bas du pare-brise 2, et une position d'arrivée P2, haute et proche de la verticale. Cette surface correspond à la partie du pare-brise sur laquelle le système est agencé pour effectuer les fonctions d'essuyage et de lavage. Généralement, la position de départ d'essuyage P1 correspond à la position d'arrêt des balais d'essuyage 1 lorsqu'ils ne sont pas utilisés.

Dans une variante de réalisation du système d'essuyage et de lavage, le mécanisme peut également positionner le(les) balai(s) d'essuyage 1 dans une position P0 décalée par rapport à la position de départ d'essuyage P1, ici plus basse que la position P1, située hors de la surface de pare-brise 2 balayée pour les fonctions d'essuyage et de lavage. Cette position P0, dit de parking, permet notamment de masquer les balais d'essuyage 1 derrière un capot lorsqu'ils ne sont pas utilisés.

Par rapport à la description précédente, une configuration alternative mais non représentée peut être envisagée pour certains véhicules tels que des camions, où la position de départ d'essuyage P1, est en haut alors que la position d'arrivée P2 est en bas du pare-brise 2.

Le système d'essuyage et de lavage conforme à l'invention comprend aussi des moyens de projection d'un liquide de lavage du pare-brise. Ces moyens comprennent un système de gicleurs 10 qui peuvent être embarqués sur le balai d'essuyage 1. D'une manière générale, le système comprend une pluralité de gicleurs 10 répartis selon la direction longitudinale du balai d'essuyage 1 et agencés pour projeter des jets 11 de liquide de lavage vers le pare-brise 2. Sur l'exemple considéré, le système d'essuyage et de lavage comprend au moins une série de gicleurs 10 positionnés du côté montant du balai d'essuyage 1, en allant de la position P1 vers la position P2, les jets 11 de liquide de lavage correspondant étant représentés sur la figure 1 par des traits formant un peigne sur le balai d'essuyage 1 et partant desdits gicleurs 10. Ce sens de progression est également représenté par la flèche A sur la figure 1.

Ici, la pluralité de gicleurs 10 est positionnée d'un seul côté de chaque balai d'essuyage 1. Il est possible, mais non obligatoire, que le système comprenne également des gicleurs positionnés pour projeter le liquide de lavage vers le pare-brise devant le balai d'essuyage 1 lorsque celui-ci revient de la position d'arrivée P2 vers la position de départ d'essuyage P1.
Le système de gicleurs 10 peut être réalisé de plusieurs manières connues. Il peut être constitué d'une rampe de projection fabriquée distinctement du balai d'essuyage 1, rapportée sur ce dernier ou rendue solidaire du mécanisme de connexion. De manière alternative, le système de gicleurs 10 peut être formé par un conduit intégré au balai d'essuyage 1, et qui chemine le long de la direction longitudinale de ce dernier. Un tel conduit peut être formé, par exemple, dans le déflecteur d'air.

Lesdits gicleurs 10 sont généralement alimentés à partir d'un réservoir 12 de liquide de lavage par des conduits 13. Sur l'exemple considéré, une pompe 14 commandable électroniquement et placée sur lesdits conduits 13 permet de projeter le liquide de lavage à partir des gicleurs 10 ou de stopper cette projection.

Le système d'essuyage et de lavage conforme à l'invention comprend encore des moyens de traitement, par exemple un boîtier électronique 15 connecté au moteur d'entraînement 9 du ou des bras 1 et à la pompe 14 du liquide de lavage. Le boîtier électronique 15 peut exécuter un programme commandant l'action du moteur 9 et de la pompe 14 et il est apte à faire exécuter au système d'essuyage et de lavage des cycles qui vont être décrits ci-après.

Tout d'abord, pour mémoire, le système d'essuyage et de lavage est généralement capable d'effectuer un ou plusieurs cycles successifs d'essuyage sans lavage. En référence à la figure 2, un tel cycle d'essuyage comprend deux étapes. Dans une première étape, chaque balai d'essuyage 1 parcours la surface du pare-brise 2 suivant les flèches représentées sur la partie a) de la figure 2, en allant de la position de départ d'essuyage P1 à la position d'arrivée d'essuyage P2, sans qu'il n'ait de projection de liquide de lavage. Dans une deuxième étape, le balai d'essuyage 1 parcours le pare-brise 2 en sens inverse suivant les flèches représentées sur la partie b) de la figure 2, de la position P2 à la position P1, toujours sans projection de liquide de lavage. Les positions de départ d'essuyage P1 et d'arrivée d'essuyage P2 définissent donc pour une surface d'essuyage du pare-brise 2 pour chaque balai d'essuyage 1 du système d'essuyage et de lavage.

En général, il est possible de commander le moteur 9 pour choisir entre différentes vitesses de parcours du balai d'essuyage 1 au cours d'un tel cycle.

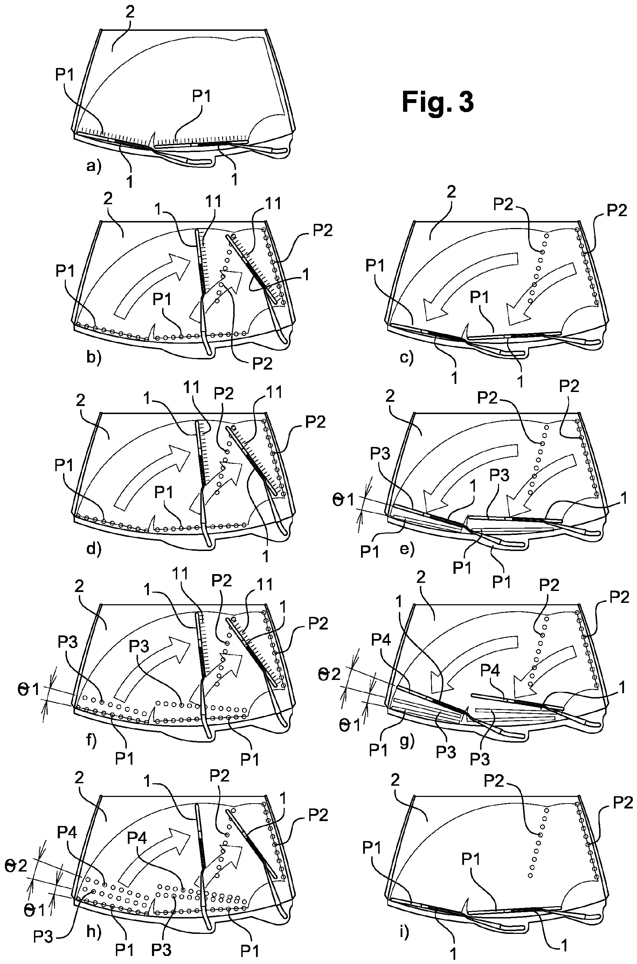

Selon un premier mode de réalisation de l'invention, en référence à la figure 3, le système d'essuyage et de lavage est configuré pour mettre en oeuvre un procédé de lavage dont les étapes sont décrites ci-après.

En référence au schéma a) de la figure 3, le procédé débute généralement lorsque les balais d'essuyage 1 sont dans la position de départ d'essuyage P1. Cette position P1 constitue alors une première position de départ P1 pour le procédé de lavage.

Le procédé comprend préférentiellement un premier cycle de balayage à partir de la première position de départ P1, correspondant à une première et une deuxième étape du procédé.

Dans une première étape, représentée sur le schéma b) de la figure 3, chaque balai d'essuyage 1 balaye le pare-brise 2 de la première position de départ P1 vers la position d'arrivée d'essuyage P2 et les gicleurs 10 projettent des jets 11 de liquide de lavage devant chaque balai d'essuyage 1 durant tout le parcours. Durant ce parcours, la poussière est au moins en partie diluée par le liquide puis poussée devant chaque balai d'essuyage 1 par la lame racleuse.

Dans une deuxième étape, représentée sur le schéma c) de la figure 3, chaque balai d'essuyage 1 balaye le pare-brise 2 en retour de la position P2 vers la première position de départ P1. Dans cette étape, la projection de liquide de lavage par les gicleurs 10 est préférentiellement arrêtée. Durant ce parcours, une partie de la poussière restante sur le pare-brise 2 est poussée par chaque balai d'essuyage 1 vers la première position de départ P1 et forme une bande sur cette position P1. On peut noter à ce sujet que le balai d'essuyage 1 de droite sur les schémas balaye la poussière laissée par le balai d'essuyage 1 de gauche dans sa position d'arrivée d'essuyage P2 au milieu du pare-brise 2 à l'étape précédente.

Le procédé selon l'invention comprend ensuite un deuxième cycle de balayage, correspondant ici à une troisième et une quatrième étape du procédé.

Dans une troisième étape, représentée sur le schéma d) de la figure 3, chaque balai d'essuyage 1 balaye le pare-brise 2 de la première position de départ P1 vers la position d'arrivée d'essuyage P2 et, de préférence, les gicleurs 10 projettent des jets 11 de liquide de lavage devant chaque balai d'essuyage 1 durant tout le parcours. Cette étape est généralement sensiblement la même que la première étape.

Dans une quatrième étape, représentée sur le schéma e) de la figure 3, chaque balai d'essuyage 1 balaye le pare-brise 2 en retour de la position P2 vers une position P3 située légèrement avant la première position de départ P1 en venant de la position d'arrivée d'essuyage P2. Le décalage de P3 par rapport à P1 est défini de telle sorte que la lame racleuse de chaque balai d'essuyage 1 ne touche pas la zone où elle a déposée de la poussière, lors du positionnement du balai d'essuyage 1 sur la première position de départ P1, à la fin de la deuxième étape. Typiquement, cette position P3 correspond à un décalage θ1 de la rotation du bras d'entraînement 7 de deux à trois degrés vers le haut par rapport à la position P1, commandé au moteur d'entraînement 9. Dans cette étape, la projection de liquide de lavage par les gicleurs 10 est préférentiellement arrêtée.

La position P3 constitue une deuxième position de départ pour des balayages ultérieurs du pare-brise 2 par chaque balai d'essuyage 1. Durant le parcours de chaque balai d'essuyage 1 dans cette quatrième étape, une partie de la poussière restante sur le pare-brise 2 après la troisième étape est poussée par chaque balai d'essuyage 1 vers la deuxième position de départ P3. En repartant en sens inverse, le balai d'essuyage 1 peut entraîner une partie de la poussière repoussée par lui-même et formant une bande sur la deuxième position de départ P3. Cependant, après les deuxième et troisième étapes comprenant une projection de liquide de lavage, cette bande de poussière est nettement moins importante que la bande de poussière déposée sur la première position de départ P1. Chacun des balais d'essuyage 1 entraîne donc moins de poussière pouvant se déposer sur le pare-brise 2 que s'il repartait de la première position de départ P1.

De manière préférentielle, un tel procédé de lavage comprend encore un troisième cycle de balayage correspondant à une cinquième et une sixième étape.

Dans une cinquième étape, représentée sur le schéma f) de la figure 3, chaque balai d'essuyage 1 balaye le pare-brise 2 de la deuxième position de départ P3 vers la position d'arrivée P2 et, de préférence, les gicleurs 10 projettent des jets de liquide de lavage devant chaque balai d'essuyage 1 durant tout le parcours. Durant ce parcours, la poussière restante est encore une fois au moins en partie diluée par le liquide puis poussée devant chaque balai d'essuyage 1 par la lame racleuse.

Dans une sixième étape, représentée sur le schéma g) de la figure 3, chaque balai d'essuyage 1 balaye le pare-brise 2 en retour de la position P2 vers une position P4 située légèrement avant la deuxième position de départ P3 en venant de P2. Le décalage de P4 par rapport à P3 est défini de telle sorte que la lame racleuse de chaque balai d'essuyage 1 ne touche pas la zone où elle a déposée de la poussière, lors du positionnement du balai d'essuyage 1 sur la deuxième position de départ P3, à la fin de la quatrième étape. Typiquement, cette position correspond, comme précédemment à un décalage θ2 de la rotation du bras d'entraînement 7 de deux à 3 degrés vers le haut par rapport à la position P3, commandé au moteur d'entraînement 9. Ainsi, la troisième position de départ P4 correspond sensiblement à un décalage θ3, égal à la somme des décalages successifs θ1 et θ2, de quatre à sept degrés dans la rotation du bras d'entraînement 7 par rapport à la position de départ d'essuyage P1. Dans cette étape, la projection de liquide de lavage par les gicleurs 10 est préférentiellement arrêtée.

Dans une septième étape, le système d'essuyage et de lavage effectue préférentiellement un cycle d'essuyage sans actionnement de la projection de lavage, semblable à celui décrit en référence à la figure 2. Cependant, de manière différente du cycle d'essuyage précédemment décrit, chaque balai d'essuyage 1 débute ce cycle en partant de la deuxième position de départ P4, comme illustré sur le schéma h) de la figure 3, et revient, comme illustré sur le schéma i) de la figure 3, à la position de départ d'essuyage P1.

Suivant les mêmes raisons que celles évoquées précédemment, le fait que la troisième position de départ P4 soit décalée par rapport à la deuxième position de départ P3 entraîne que le balai d'essuyage 1 dépose moins de poussière restante lors de la septième étape. La surface du pare-brise 2 est nettoyée de manière optimale après un tel cycle de balayage, en particulier si une quantité importante de poussière s'était déposée sur le pare-brise 2.

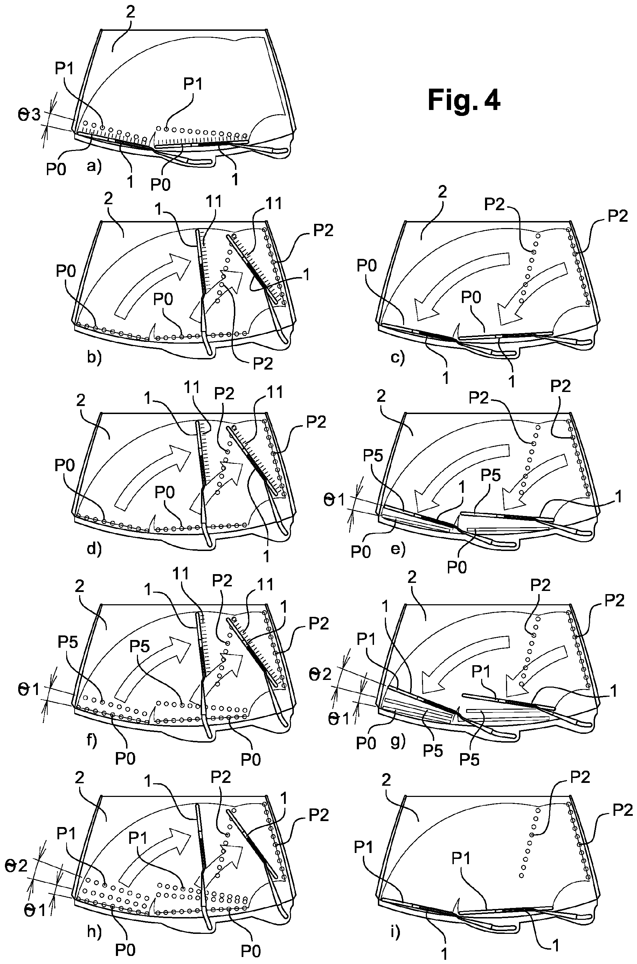

Un deuxième mode de réalisation d'un tel procédé de lavage est maintenant décrit, en référence à la figure 4, pour un système d'essuyage et de lavage agencé pour pouvoir positionner chaque balai d'essuyage 1 sur une position de parking P0. Pour exécuter le deuxième mode de réalisation du procédé qui va être décrite ci-après, la position de départ P1 d'un cycle d'essuyage du système d'essuyage et de lavage est décalée vers la position d'arrivée d'essuyage P2 par rapport à la position de parking P0 d'une distance équivalente à celle qui sépare la première position de départ P1 et la troisième position de départ P4 dans le premier mode de réalisation du procédé de lavage. Autrement dit ce décalage, illustré sur la partie a) de la figure 4, correspond sensiblement à un angle de rotation θ3 d'environ quatre à sept degrés vers la position d'arrivée P2, pour le moteur 9 et le bras d'entraînement 7, en allant de la position de parking P0 vers la position de départ d'essuyage P1.

En référence au schéma a) de la figure 4, le procédé selon le deuxième mode de réalisation débute généralement lorsque les balais d'essuyage 1 sont dans la position de parking P0. Si les balais d'essuyage 1 ne sont pas dans cette position et se trouvent par exemple, dans la première de départ d'essuyage P1, le procédé comprend une étape préliminaire installant chaque balai d'essuyage 1 dans la position de parking P0, de manière à ce que P0 constitue la première position de départ du deuxième mode de réalisation du procédé de lavage.

De manière préférée, le deuxième mode de réalisation du procédé comprend encore un premier cycle de balayage à partir de la première position de départ P1, correspondant à des première et deuxième étapes, représentées sur les schémas b) et c) de la figure 4, qui se déroulent dans les mêmes conditions que les première et deuxième étapes du premier mode de réalisation, avec pour première position de départ la position de parking P0.

Le deuxième mode de réalisation procédé comprend ensuite un deuxième cycle de balayage, correspondant ici à une troisième et une quatrième étape du procédé.

Dans la troisième étape, représentée sur le schéma d) de la figure 4, semblable à la troisième étape du premier mode de réalisation, chaque balai d'essuyage 1 balaye le pare-brise 2 de la première position de départ P0 de la présente variante du cycle vers la position d'arrivée P2 et dans laquelle, de préférence, les gicleurs 10 projettent des jets 11 de liquide de lavage devant chaque balai d'essuyage 1 durant tout le parcours.

La quatrième étape du deuxième mode de réalisation, représentée sur le schéma e) de la figure 4, est aussi semblable à la quatrième étape du premier mode de réalisation, préférentiellement sans projection de liquide de lavage. Ici, chaque balai d'essuyage 1 balaye le pare-brise 2 en retour de la position P2 vers une position P5 située légèrement avant la position de parking P0 en venant de la position d'arrivée P2. Le décalage de P5 par rapport à P0 est défini de la même manière que celui entre les deuxième P3 et première P1 positions de départ de la première variante. Typiquement, cette position correspond à un décalage θ1 de la rotation du bras d'entraînement 7 de deux à trois degrés vers le haut par rapport à la position P0. Ce décalage a donc les mêmes effets que le décalage introduit dans la première variante sur l'entraînement de la poussière par la lame racleuse du balai d'essuyage 1 lorsqu'il repart ensuite vers la position d'arrivée d'essuyage P2.

On notera aussi que le décalage θ2 entre la deuxième position de départ P5 de ce mode de réalisation et la position de départ d'essuyage P1, qui est égal à la différence entre les décalages θ3 et θ1, est sensiblement le même que celui entre la deuxième P3 et la troisième P4 position de départ dans le premier mode de réalisation.

De manière préférentielle, cette deuxième variante comporte aussi un troisième cycle de balayage correspondant à des cinquième et sixième étapes, se déroulant avec les mêmes conditions que celles décrites pour le premier mode de réalisation mais en utilisant des positions de départ différentes.

Dans un cinquième étape, représentée sur le schéma f) de la figure 4, les balais d'essuyage 1 remontent ici de la deuxième position de départ P5 de ce cycle vers la position d'arrivée P2.

Dans une sixième étape, représentée sur le schéma g) de la figure 4, les balais d'essuyage 1 repartent de la position d'arrivée P2 et s'arrêtent à la position de départ d'essuyage P1, qui est ici équivalente à la troisième position de départ P4 de la variante précédente et présente un décalage θ2 avec la deuxième position de départ P5.

Enfin, le deuxième mode de réalisation comprend préférentiellement une septième étape, dans laquelle le système d'essuyage et de lavage effectue un cycle d'essuyage sans actionnement de la projection de lavage, semblable à celui décrit en référence à la figure 2.

Dans ce deuxième mode de réalisation, deux options sont possibles. Dans une première option, contrairement à la variante précédente, le cycle d'essuyage de la septième étape s'effectue normalement, en partant de la position de départ d'essuyage P1 comme illustré sur le schéma h) de la figure 4, et chaque balai d'essuyage 1 revient à la position de départ d'essuyage P1, comme illustré sur le schéma i) de la figure 4. Le système d'essuyage et de lavage est alors prêt pour effectuer des cycles d'essuyage, par exemple en cas de pluie. Avec cette option, la seconde variante présente l'avantage que la lame racleuse de chaque balai d'essuyage 1 ne revient jamais sur les bandes de poussière déposées par aux première P0, P5 positions de départ des cycles de balayages où les moyens de projection de liquide de lavage ont pu être activés.

Dans une deuxième option, si le système d'essuyage et de lavage ne doit pas être utilisé immédiatement après la mise en oeuvre du procédé de lavage, par exemple en cas de parking, le cycle d'essuyage peut être suivi d'un déplacement de chaque balai d'essuyage 1 vers la position de parking P0.

## Revendications

1. Procédé pour laver une vitre (2) de véhicule, à l'aide d'au moins un balai d'essuyage (1) et de moyens de projection (10, 13, 14) d'un liquide de lavage de la vitre (2), sur une surface d'essuyage délimitée entre une position de départ d'essuyage (P1) et une position d'arrivée d'essuyage (P2) pour ledit au moins un balai d'essuyage, ledit procédé comprenant au moins deux cycles de balayage comportant chacun :
- une première étape dans laquelle le balai d'essuyage (1) est actionné de manière à parcourir la vitre (2) entre une première position de départ (P1 ; P0) et la position d'arrivée d'essuyage (P2), et
- une deuxième étape dans laquelle le balai d'essuyage (1) est actionné de manière à parcourir la vitre (2) en sens inverse depuis la position d'arrivée d'essuyage (P2) jusqu'à une deuxième position de départ (P3 ; P5) ;
la première position de départ d'un cycle de balayage correspondant à la deuxième position de départ du cycle de balayage qui le précède, **caractérisé en ce qu'**il démarre avec un premier cycle de balayage dont les première et deuxième positions de départ (P1, P0) sont sensiblement identiques et sont au moins aussi éloignées de la position d'arrivée d'essuyage (P2) que la position de départ d'essuyage (P1) et dans lequel les moyens de projection (10, 13, 14) sont activés au moins au cours de la première étape de manière à projeter du liquide de lavage devant le balai d'essuyage (1) par rapport à son sens de progression (A), et **en ce qu'**il comporte, immédiatement après, un deuxième cycle de balayage, dont la deuxième position de départ (P3 ; P5) est décalée vers la position d'arrivée d'essuyage (P2) par rapport à la première position de départ (P1 ; P0).

2. Procédé selon la revendication 1, comprenant, après le deuxième cycle de balayage, au moins un autre cycle de balayage dont la deuxième position de départ (P3 ; P5) est décalée vers la position d'arrivée d'essuyage (P2) par rapport à sa première position de départ (P1 ; P0).

3. Procédé selon la revendication 1 ou 2, dans lequel les première (P1) et deuxième (P3) positions de départ de chaque cycle de balayage sont situées dans une zone déterminée proche de la position de départ d'essuyage (P1), de manière à minimiser un étalement de poussières sur la surface d'essuyage en dehors de la dite zone déterminée.

4. Procédé selon l'une des revendications précédentes, dans lequel, pour au moins l'un des cycles de balayage effectué après le premier cycle de balayage, les moyens de projection (10, 13, 14) sont activés au cours de la première étape de manière à projeter du liquide de lavage devant le balai d'essuyage (1) par rapport à son sens de progression (A).

5. Procédé selon l'une des revendications précédentes, dans lequel, pour le dernier cycle de balayage effectué, les moyens de projection (10, 13, 14) d'un liquide de lavage de la vitre (2) ne sont actionnés ni au cours de la première étape ni au cours de la deuxième étape.

6. Procédé selon l'une des revendications précédentes, dans lequel la première position de départ (P1) du premier cycle de balayage effectué est sensiblement la même que la position de départ d'essuyage (P1).

7. Procédé selon l'une des revendications 1 à 4, dans lequel la première position de départ (P0) du premier cycle de balayage effectué est une position de parking, plus éloignée de la position d'arrivée d'essuyage (P2) que la position de départ d'essuyage (P1).

8. Procédé selon l'une des revendications précédentes, dans lequel la deuxième étape de tous les cycles de balayage s'effectue sans activer les moyens de projection (10, 13, 14) de liquide de lavage.

9. Procédé selon l'une des revendications précédentes, dans lequel le balai d'essuyage (1) parcours la vitre (2) en remontant lors de la première étape d'un cycle de balayage.

10. Dispositif de commande destiné à un système d'essuyage et de lavage d'une vitre (2) d'un véhicule comprenant un balai d'essuyage (1), des moyens d'actionnement (7, 9) dudit balai d'essuyage (1) et des moyens de projection (10, 13, 14) d'un liquide de lavage de la vitre (2), ledit dispositif comprenant un organe électronique (15) agencé pour activer les moyens d'actionnement (7, 9) dudit balai d'essuyage (1) et les moyens de projection (10, 13, 14) du liquide de lavage, de manière à essuyer ladite surface d'essuyage avec ledit au moins un balai d'essuyage (1) sans projeter de liquide de lavage et à effectuer le procédé selon l'une des revendications précédentes.

11. Système d'essuyage et de lavage d'une vitre (2) d'un véhicule, ledit système comprenant un balai d'essuyage (1), des moyens d'actionnement (7, 9) dudit balai d'essuyage (1) agencés pour que le balai d'essuyage (1) parcours la vitre (2) entre une position de départ et une position d'arrivée en modifiant la position de départ lors de son retour, des moyens de projection (10, 13, 14) d'un liquide de lavage de la vitre agencés pour projeter le liquide de lavage devant le balai d'essuyage (1) lors de sa progression d'une position de départ (P0 ; P1 ; P3) vers la position d'arrivée (P2), et un dispositif de commande selon la revendication 10.

12. Système selon la revendication 11, dans lequel les moyens d'actionnement d'un balai d'essuyage (1) comprennent un moteur (9) commandable électroniquement et un bras d'entraînement (7) du balai d'essuyage (1), ledit moteur (9) entraînant en rotation ledit bras d'entraînement.

13. Système selon la revendication 12, agencé de manière à ce que le décalage entre la deuxième position de départ (P3) et la première position de départ (P1), sur au moins un cycle de balayage, corresponde à une différence angulaire au moins égale à deux degrés dans la rotation du bras d'entraînement.

14. Système selon l'une des revendications 11 à 13, configuré pour que la position de départ d'essuyage (P1) soit basse par rapport à la position d'arrivée d'essuyage (P2).

15. Système selon l'une des revendication 11 à 14, configuré pour effectuer des cycles d'essuyage, dans lesquels le balai d'essuyage (1) fait un va-et-vient entre une position de départ d'essuyage (P1) et la position d'arrivée d'essuyage (P2) sans que les moyens de projection (10, 13, 14) d'un liquide de lavage de la vitre (2) ne soient actionnés, et agencé de manière à ce que le balai d'essuyage (1) se positionne dans une position de parking (P0), lorsqu'il n'est pas utilisé, plus éloignée de la position d'arrivée d'essuyage (P2) que la position de départ d'essuyage (P1).

## Patentansprüche

1. Verfahren zum Waschen einer Scheibe (2) eines Fahrzeugs mit Hilfe von mindestens einem Wischerblatt (1) und Mitteln (10, 13, 14) zum Ausstoßen einer Waschflüssigkeit der Scheibe (2) auf eine begrenzte Wischfläche zwischen einer Ausgangswischposition (P1) und einer Ankunftswischposition (P2) für das mindestens eine Wischerblatt, wobei das Verfahren mindestens zwei Wischzyklen umfasst, die jeweils umfassen:
- einen ersten Schritt, in dem das Wischerblatt (1) betätigt wird, um über die Scheibe (2) zwischen einer ersten Ausgangsposition (P1; P0) und der Ankunftswischposition (P2) zu fahren, und
- einen zweiten Schritt, in dem das Wischerblatt (1) betätigt wird, um über die Scheibe (2) in der umgekehrten Richtung aus der Ankunftswischposition (P2) zu einer zweiten Ausgangsposition (P3; P5) zu fahren;
wobei die erste Ausgangsposition eines Wischzyklus der zweiten Ausgangsposition des Wischzyklus entspricht, der diesem vorausgeht, **dadurch gekennzeichnet, dass** dieses mit einem ersten Wischzyklus startet, dessen erste und zweite Ausgangsposition (P1, P0) im Wesentlichen identisch sind und mindestens ebenso weit von der Ankunftswischposition (P2) entfernt sind wie die Ausgangswischposition (P1), und wobei die Ausstoßmittel (10, 13, 14) mindestens während des ersten Schritts aktiviert werden, um Waschflüssigkeit vor das Wischerblatt (1) in Bezug auf seine Fahrrichtung (A) auszustoßen, und dadurch, dass dieses unmittelbar danach einen zweiten Waschzyklus umfasst, dessen zweite Ausgangsposition (P3; P5) zur Ankunftswischposition (P2) in Bezug auf die erste Ausgangsposition (P1; P0) versetzt ist.

2. Verfahren nach Anspruch 1, umfassend, nach dem zweiten Wischzyklus, mindestens einen anderen Wischzyklus, dessen zweite Ausgangsposition (P3; P5) zur Ankunftswischposition (P2) in Bezug auf seine erste Ausgangsposition (P1; P0) versetzt ist.

3. Verfahren nach Anspruch 1 oder 2, wobei die erste (P1) und zweite (P3) Ausgangsposition jedes Wischzyklus in einer bestimmten Zone nahe bei der Ausgangswischposition (P1) angeordnet sind, um eine Verteilung von Staub auf der Wischfläche außerhalb der bestimmten Zone zu minimieren.

4. Verfahren nach einem der vorhergehenden Ansprüche, wobei, für mindestens einen der Wischzyklen, der nach dem ersten Wischzyklus durchgeführt wird, die Ausstoßmittel (10, 13, 14) während des ersten Schritts aktiviert werden, um Waschflüssigkeit vor das Wischerblatt (1) in Bezug auf seine Fahrrichtung (A) auszustoßen.

5. Verfahren nach einem der vorhergehenden Ansprüche, wobei, für den letzten durchgeführten Wischzyklus, die Mittel (10, 13, 14) zum Ausstoßen einer Waschflüssigkeit der Scheibe (2) weder während des ersten Schritts, noch während des zweiten Schritts betätigt werden.

6. Verfahren nach einem der vorhergehenden Ansprüche, wobei die erste Ausgangsposition (P1) des ersten durchgeführten Wischzyklus im Wesentlichen dieselbe ist wie die Ausgangswischposition (P1).

7. Verfahren nach einem der Ansprüche 1 bis 4, wobei die erste Ausgangsposition (P0) des ersten durchgeführten Wischzyklus eine Parkposition ist, die weiter von der Ankunftswischposition (P2) entfernt ist als die Ausgangswischposition (P1).

8. Verfahren nach einem der vorhergehenden Ansprüche, wobei der zweite Schritt aller Wischzyklen erfolgt, ohne die Mittel (10, 13, 14) zum Ausstoßen von Waschflüssigkeit zu aktivieren.

9. Verfahren nach einem der vorhergehenden Ansprüche, wobei das Wischerblatt (1) aufsteigend über die Scheibe (2) während des ersten Schritts eines Wischzyklus fährt.

10. Steuervorrichtung, welche für ein Wisch- und Waschsystem einer Scheibe (2) eines Fahrzeugs bestimmt ist, umfassend ein Wischerblatt (1), Betätigungsmittel (7, 9) des Wischerblatts (1) und Mittel (10, 13, 14) zum Ausstoßen einer Waschflüssigkeit der Scheibe (2), wobei die Vorrichtung ein elektronisches Element (15) umfasst, das eingerichtet ist, die Betätigungsmittel (7, 9) des Wischerblatts (1) und die Mittel (10, 13, 14) zum Ausstoßen der Waschflüssigkeit zu aktivieren, um über die Wischfläche mit dem mindestens einen Wischerblatt (1) zu wischen, ohne Waschflüssigkeit auszustoßen, und um das Verfahren nach einem der vorhergehenden Ansprüche durchzuführen.

11. System zum Wischen und Waschen einer Scheibe (2) eines Fahrzeugs, wobei das System umfasst: ein Wischerblatt (1), Betätigungsmittel (7, 9) des Wischerblatts (1), die eingerichtet sind, damit das Wischerblatt (1) über die Scheibe (2) zwischen einer Ausgangsposition und einer Ankunftsposition fährt, wobei die Ausgangsposition bei seiner Rückkehr modifiziert wird, Mittel (10, 13, 14) zum Ausstoßen einer Waschflüssigkeit der Scheibe, die eingerichtet sind, die Waschflüssigkeit vor das Wischerblatt (1) während seines Fahrens von einer Ausgangsposition (P0; P1; P3) zur Ankunftsposition (P2) auszustoßen, und eine Steuervorrichtung nach Anspruch 10.

12. System nach Anspruch 11, wobei die Betätigungsmittel eines Wischerblatts (1) einen Motor (9), der elektronisch gesteuert werden kann, und einen Antriebsarm (7) des Wischerblatts (1) umfassen, wobei der Motor (9) den Antriebsarm in Drehung versetzt.

13. System nach Anspruch 12, welches derart eingerichtet ist, dass die Versetzung zwischen der zweiten Ausgangsposition (P3) und der ersten Ausgangsposition (P1) in mindestens einem Wischzyklus einer Winkeldifferenz mindestens gleich zwei Grad in der Drehung des Antriebsarms entspricht.

14. System nach einem der Ansprüche 11 bis 13, welches derart ausgelegt ist, dass die Ausgangswischposition (P1) in Bezug auf die Ankunftswischposition (P2) tief ist.

15. System nach einem der Ansprüche 11 bis 14, welches ausgelegt ist, Wischzyklen durchzuführen, in denen das Wischerblatt (1) zwischen einer Ausgangswischposition (P1) und der Ankunftswischposition (P2) hin- und hergeht, ohne dass die Mittel (10, 13, 14) zum Ausstoßen einer Waschflüssigkeit der Scheibe (2) betätigt werden, und derart eingerichtet ist, dass sich das Wischerblatt (1) in einer Parkposition (P0) positioniert, wenn dieses nicht verwendet wird, die weiter von der Ankunftswischposition (P2) entfernt ist als die Ausgangswischposition (P1).

## Claims

1. Method for washing a window (2) of a vehicle, using at least one wiper blade member (1) and means (10, 13, 14) for projecting a liquid for washing the window (2) onto a wiping surface which is delimited between a wiping starting position (P1) and a wiping end position (P2) for the at least one wiper blade member, the method comprising at least two wiping cycles each comprising:
- a first step in which the wiper blade member (1) is actuated in order to move over the window (2) between a first starting position (P1; P0) and the wiping end position (P2), and
- a second step in which the wiper blade member (1) is actuated in order to move over the window (2) in the opposite direction from the wiping end position (P2) as far as a second starting position (P3; P5);
the first starting position of a wiping cycle corresponding to the second starting position of the preceding wiping cycle, **characterised in that** it begins with a first wiping cycle whose first and second starting positions (P1, P0) are substantially identical and are at least as far away from the wiping end position (P2) as the wiping starting position (P1) and in which the projection means (10, 13, 14) are actuated at least during the first step in order to project washing liquid in front of the wiper blade member (1) relative to its movement direction (A), and **in that** it comprises, immediately afterwards, a second wiping cycle whose second starting position (P3; P5) is offset towards the wiping end position (P2) relative to the first starting position (P1; P0).

2. Method according to claim 1, comprising, after the second wiping cycle, at least one other wiping cycle whose second starting position (P3; P5) is offset towards the wiping end position (P2) with respect to the first starting position (P1; P0) thereof.

3. Method according to claim 1 or claim 2, wherein the first starting position (P1) and second starting position (P3) of each wiping cycle are located in a predetermined zone which is close to the wiping starting position (P1), in order to minimise a spread of dust over the wiping surface outside the predetermined zone.

4. Method according to any one of the preceding claims, wherein, for at least one of the wiping cycles which is carried out after the first wiping cycle, the projection means (10, 13, 14) are actuated during the first step in order to project washing liquid in front of the wiper blade member (1) relative to its movement direction (A).

5. Method according to any one of the preceding claims, wherein, for the last wiping cycle which has been carried out, the means (10, 13, 14) for projecting a liquid for washing the window (2) are actuated neither during the first step nor during the second step.

6. Method according to any one of the preceding claims, wherein the first starting position (P1) of the first wiping cycle which is carried out is substantially the same as the wiping starting position (P1).

7. Method according to any one of claims 1 to 4, wherein the first starting position (P0) of the first wiping cycle which is carried out is a parking position which is further away from the wiping end position (P2) than the wiping starting position (P1).

8. Method according to any one of the preceding claims, wherein the second step of all the wiping cycles is carried out without actuating the means (10, 13, 14) for projecting washing liquid.

9. Method according to any one of the preceding claims, wherein the wiper blade member (1) moves over the window (2) upwards during the first step of a wiping cycle.

10. Control device intended for a system for wiping and washing a window (2) of a vehicle, comprising a wiper blade member (1), means (7, 9) for actuating the wiper blade member (1) and means (10, 13, 14) for projecting a liquid for washing the window (2), the device comprising an electronic member (15) which is arranged in order to actuate the actuation means (7, 9) of the wiper blade member (1) and the means (10, 13, 14) for projecting washing liquid in order to wipe the wiping surface with the at least one wiper blade member (1) without projecting washing liquid and in order to carry out the method according to any one of the preceding claims.

11. System for wiping and washing a window (2) of a vehicle, the system comprising a wiper blade member (1), means (7, 9) for actuating the wiper blade member (1) which are arranged so that the wiper blade member (1) moves over the window (2) between a starting position and an end position, modifying the starting position when it returns, means (10, 13, 14) for projecting a liquid for washing the window, which means are arranged to project the washing liquid in front of the wiper blade member (1) during its movement from a starting position (P0; P1; P3) to the end position (P2) and a control device according to claim 10.

12. System according to claim 11, wherein the actuation means of a wiper blade member (1) comprise a motor (9) which can be controlled electronically and an arm (7) for driving the wiper blade member (1), the motor (9) rotatably driving the drive arm.

13. System according to claim 12, arranged so that the offset between the second starting position (P3) and the first starting position (P1), over at least one wiping cycle, corresponds to an angular difference which is at least equal to two degrees in the rotation of the drive arm.

14. System according to any one of claims 11 to 13, configured so that the wiping starting position (P1) is low relative to the wiping end position (P2).

15. System according to any one of claims 11 to 14, configured to carry out wiping cycles in which the wiper blade member (1) carries out a back and forth movement between a wiping starting position (P1) and the wiping end position (P2) without the means (10, 13, 14) for projecting a liquid for washing the window (2) being actuated, and arranged so that the wiper blade member (1) is positioned in a parking position (P0), when it is not used, which is further away from the wiping end position (P2) than the wiping starting position (P1).
